# FASCICULE DE BREVET EUROPEEN

(11) **EP 3 479 383 B1**
(45) Date de publication et mention de la délivrance du brevet: **13.05.2020**
(21) Numéro de dépôt: 17732902.6
(22) Date de dépôt: 26.06.2017
(51) Int. Cl.: G21C 5/02, G21C 17/112, G21C 19/20

(54) **RÉACTEUR NUCLÉAIRE, PROCÉDÉS DE MONTAGE ET DE REMPLACEMENT DE CONDUITS DE THERMOCOUPLES, ENSEMBLE POUR LA MISE EN OEUVRE DES PROCÉDÉS**
KERNREAKTOR, VERFAHREN FÜR MONTAGE UND ERSATZ VON THERMOELEMENTLEITUNGEN, ANORDNUNG ZUR DURCHFÜHRUNG DIESER VERFAHREN
NUCLEAR REACTOR, METHODS FOR ASSEMBLING AND REPLACING THERMOCOUPLE DUCTS, ASSEMBLY FOR IMPLEMENTING THESE METHODS

(30) Priorité: 29.06.2016 FR 1656122
(43) Date de publication de la demande: 08.05.2019
(73) Titulaire: FRAMATOME, 92400 Courbevoie (FR)
(72) Inventeur: CAHOUET, Laurent, 71150 Chaudenay (FR); MAGAIN, Bruno, 71440 Montret (FR); SCALVINI, Alain, 71370 Ouroux Sur Saone (FR)
(74) Mandataire: Lavoix
(86) Numéro de dépôt international: PCT/EP2017/065687
(87) Numéro de publication internationale: WO 2018/001950

(56) Documents cités:
- US-A1- 2012 213 320
- US-A1- 2016 180 978

## Description

La présente invention concerne en général le montage des conduits de thermocouple dans un réacteur nucléaire.

Plus précisément, l'invention concerne selon un premier aspect :
- une cuve ;
- des assemblages de combustibles nucléaires formant un cœur disposé dans la cuve ;
- une plaque de support, disposée dans la cuve au-dessus du coeur ;
- une pluralité de conduits de thermocouples disposés dans la cuve et traversant la plaque de support par des orifices dédiés ;
- des organes de support prévus pour maintenir en position les conduits de thermocouples, chaque organe de support étant rigidement fixé à la plaque de support, au moins un conduit de thermocouples étant fixés à chaque organe de support.

Des exemples de réacteurs nucléaires sont connus des documents US 2016/180978 et US 2012/213320.

Les réacteurs nucléaires à eau sous pression comportent, à l'intérieur d'une cuve, le cœur du réacteur nucléaire constitué par des assemblages de combustibles de forme prismatique avec leur axe vertical et, au-dessus du cœur, des équipements internes supérieurs comportant en particulier un ensemble de tubes-guides verticaux permettant d'assurer le guidage des barres de commande constituées par des faisceaux de crayons placés parallèlement les uns aux autres et renfermant un matériau absorbant les neutrons.

Pour assurer la commande des réacteurs par réglage de la réactivité du cœur, les grappes de crayons absorbants sont déplacées dans la direction verticale, pendant le fonctionnement du réacteur, de manière que les crayons absorbants soient introduits sur une hauteur plus ou moins importante à l'intérieur de certains assemblages combustibles du cœur.

Les équipements internes supérieurs comportent, en général, une plaque supérieure également dénommée plaque de support et une plaque inférieure constituant la plaque supérieure du cœur du réacteur nucléaire, venant en appui sur l'extrémité supérieure des assemblages combustibles lorsque les équipements internes supérieurs sont en position de service dans le cœur du réacteur. Les tubes-guides verticaux assurant le guidage des tiges de commande sont reliés à la plaque de support et à la plaque inférieure. Ils comportent chacun une première partie intercalée entre la plaque de support et la plaque inférieure et une seconde partie fixée au-dessus de cette plaque de support. Des colonnes entretoises disposées entre la plaque de support et la plaque inférieure, parallèlement aux tubes-guides permettent de maintenir ces plaques et d'assurer la rigidité des équipements internes supérieurs.

Les équipements internes supérieurs comprennent aussi des colonnes d'instrumentation, telles que des colonnes de thermocouples de forme cylindrique. Dans chacune des colonnes de thermocouples, est disposé un ensemble de thermocouples permettant de mesurer la température du fluide de refroidissement à la sortie d'un ensemble présélectionné d'assemblages de combustible du cœur du réacteur.

Le nombre de colonnes de thermocouples est généralement de deux ou de quatre.

Chaque colonne de thermocouples n'est pas fixée sur la plaque de support des équipements internes supérieurs, mais est guidée par une fusée s'étendant verticalement au-dessus de cette plaque et qui pénètre dans la colonne de thermocouples. Par contre, chaque colonne de thermocouples est rendue solidaire du couvercle de la cuve du réacteur uniquement par des moyens d'étanchéité supérieurs, disposés entre une tubulure d'un adaptateur fixé dans une ouverture du couvercle et la partie supérieure de la colonne.

Plusieurs thermocouples sont donc disposés dans une colonne et sortent de cette colonne par des ouvertures périphériques, ménagées à la base de la colonne pour rejoindre chacun un piquage de passage au travers de la plaque de support. A cet effet, chaque piquage est pourvu d'un tube de guidage disposé dans l'alignement d'un orifice ménagé dans la plaque de support, sensiblement à l'aplomb d'une zone où la mesure de la température doit être effectuée. Le thermocouple est introduit dans un conduit supérieur de guidage porté par la colonne de thermocouples et dans un conduit inférieur de guidage disposé dans le tube du piquage correspondant. L'extrémité sensible de mesure du thermocouple est positionnée au niveau de la zone de mesure prédéterminée.

Une partie des thermocouples est destinée à mesurer la température du fluide de refroidissement du réacteur, à la sortie du cœur, en-dessous de la plaque supérieure du cœur, à proximité de l'embout supérieur des assemblages combustibles.

Les thermocouples introduits dans les conduits sont soumis à des contraintes de température et de pression élevées, si bien que certains d'entre eux peuvent présenter des défauts de fonctionnement après un certain temps de séjour dans la cuve du réacteur.

Il n'est alors plus possible d'avoir une image fiable et représentative de la température réelle du fluide de refroidissement du cœur du réacteur.

Il est donc nécessaire de remplacer ces thermocouples et/ou ces conduits lors des opérations d'entretien programmées du réacteur nucléaire.

Le remplacement des conduits est effectué après arrêt et refroidissement du réacteur et après avoir réalisé le démontage du couvercle.

Dans les réacteurs actuels, les conduits de thermocouples sont soudés sur les organes de support, ceux-ci étant vissés à la plaque de support.

Le démontage des conduits de thermocouples entraîne la détérioration irréversible des organes de support. Il est nécessaire d'usiner les organes de support pour supprimer les soudures. La mise en place de nouveaux conduits de thermocouples est également fastidieuse car elle nécessite des opérations de soudage dans un environnement fortement irradiant.

Dans ce contexte, l'invention vise à proposer un ensemble permettant de faciliter une telle opération de remplacement.

A cette fin, l'invention porte sur un réacteur nucléaire selon la revendication 1.

Ainsi, le démontage des conduits de thermocouples est facilité. Il suffit de démonter la liaison pour séparer la tête avec les conduits de thermocouples du pied. Le remontage est également facilité.

Ceci facilite le remplacement d'un ou plusieurs conduits de thermocouples déterminés, et mais également le remplacement en une seule opération de tous les conduits de thermocouples. Cette dernière opération est effectuée en séparant les têtes de tous les organes de support des pieds correspondants, et en évacuant en même temps tous les conduits de thermocouples avec les têtes qui leurs sont attachées.

Le réacteur nucléaire peut également présenter une ou plusieurs des caractéristiques des revendications 2 à 5, considérées individuellement ou selon toutes les combinaisons techniquement possibles.

Selon un second aspect, l'invention porte sur un procédé de montage selon la revendication 6.

Le procédé peut également présenter une ou plusieurs des caractéristiques des revendications 7 à 9, considérées individuellement ou selon toutes les combinaisons techniquement possibles.

Selon un troisième aspect, l'invention porte sur un procédé de remplacement selon la revendication 10.

Selon un quatrième aspect, l'invention porte sur un ensemble selon la revendication 11 pour la mise en oeuvre du procédé de montage ci-dessus.

L'invention sera mieux comprise à la lecture de la description qui va suivre, donnée à titre d'exemple et faite en référence aux dessins annexés, sur lesquels :
- la Fig. 1 est une vue schématique en coupe par un plan de symétrie verticale d'une cuve d'un réacteur nucléaire à eau sous pression,
- la Fig. 2 est une vue schématique en perspective et partielle des équipements internes supérieurs d'un réacteur nucléaire,
- la figure 3 est une vue éclatée d'un organe de support d'un réacteur nucléaire selon l'invention ;

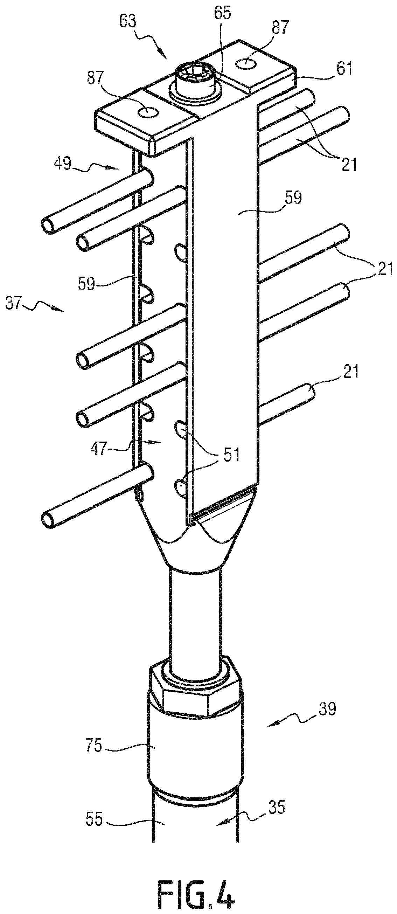

- la figure 4 est une vue en perspective de la partie supérieur de l'organe de support de la figure 3, avec des conduits de thermocouples fixés à la tête ; et
- les figures 5 et 6 illustrent deux étapes du procédé de l'invention, à savoir l'assemblage des conduits de thermocouples et des têtes des organes de support en un sous-ensemble, et le transfert du sous-ensemble d'une pièce au-dessus de la plaque de support.

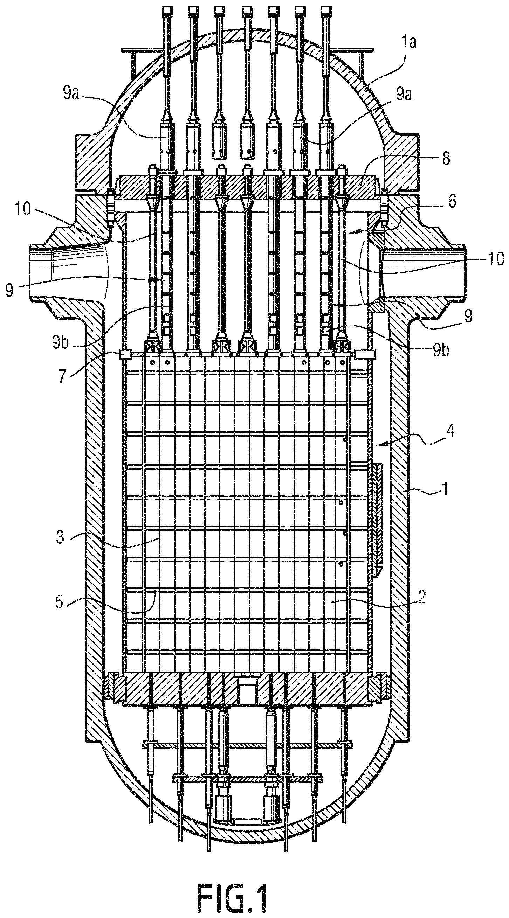

Le réacteur nucléaire illustré sur la figure 1 comprend une cuve 1 et, à l'intérieur de la cuve 1, un cœur 2 constitué par des assemblages de combustibles 3 juxtaposés de telle sorte que l'axe longitudinal des assemblages de combustibles soit vertical. Le cœur 2 du réacteur est disposé à l'intérieur des équipements internes inférieurs désignés par la référence générale 4 et qui comporte en particulier le cloisonnement 5 du cœur.

Le réacteur nucléaire est typiquement un réacteur à eau sous pression (PWR). En variante, le réacteur nucléaire est d'un autre type.

Le réacteur nucléaire comprend également des équipements internes supérieurs désignés par la référence générale 6, qui reposent sur les assemblages du cœur, par l'intermédiaire d'une plaque supérieure de cœur 7.

Comme il est visible sur la Fig. 1, les équipements internes supérieurs 6 comportent une plaque de support 8 des tubes-guides qui sera dénommée par la suite plaque de support 8. Cette plaque de support 8 s'étend parallèlement à la plaque supérieure de cœur 7 constituant la partie inférieure des équipements internes supérieurs 6 et qui est réalisée de manière à assurer la fixation des équipements internes supérieurs 6 à l'intérieur de la cuve 1.

Les équipements internes supérieurs 6 comportent des tubes-guides désignés par la référence générale 9 qui se composent chacun, au-dessus de la plaque de support 8, d'une partie supérieure 9a à section circulaire et, entre la plaque de support 8 des équipements internes supérieurs 6 et la plaque supérieure de cœur 7, d'une partie inférieure 9b généralement à section sensiblement carrée à angles arrondis. Chacune des parties 9a et 9b constitue un tube-guide 9 des équipements internes supérieurs 6 permettant le déplacement dans la direction verticale d'une grappe de réglage de la réactivité dans le cœur du réacteur nucléaire, reliée à une tige de suspension et de déplacement, dont le déplacement dans la direction vertical est assuré par un mécanisme, non représenté, situé au-dessus du couvercle 1a de la cuve 1.

Entre la plaque de support 8 des équipements internes supérieurs 6 et la plaque supérieure de cœur 7, sont placées en plus des parties inférieures 9b des tubes-guides 9, des colonnes entretoises 10 assurant le maintien et l'écartement de la plaque supérieure de cœur 7 par rapport à la plaque de support 8.

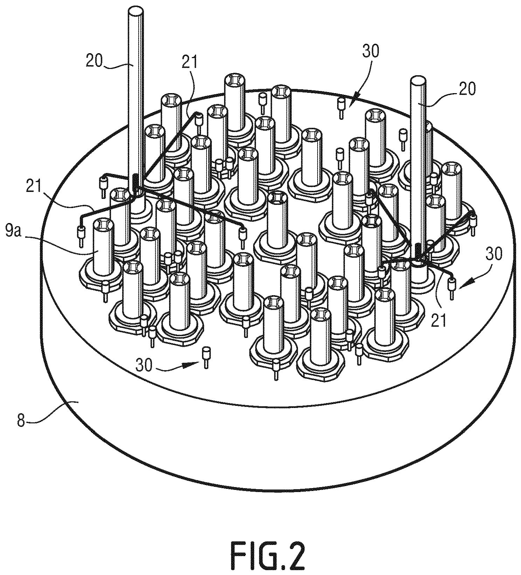

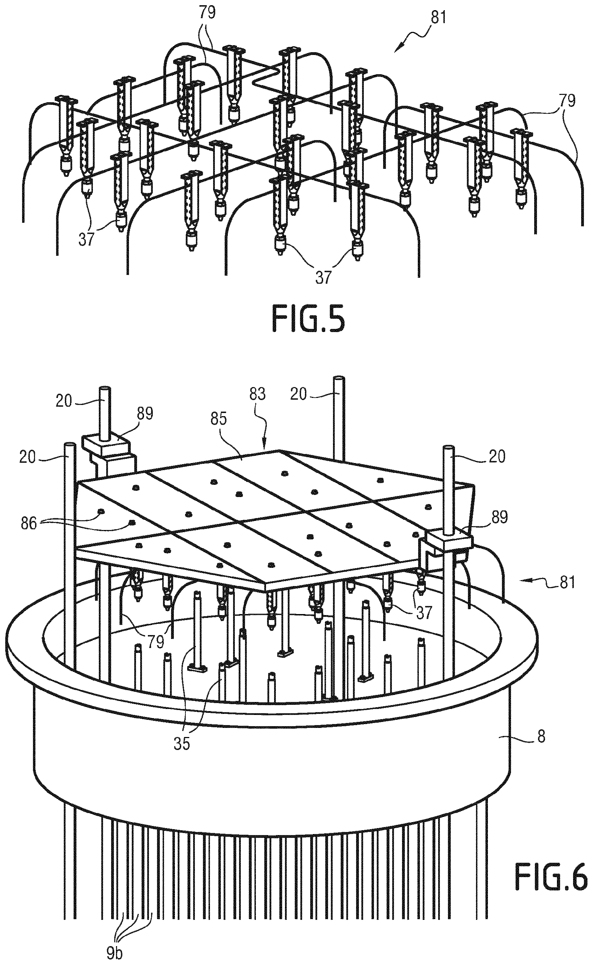

Sur la Fig. 2, on a représenté schématiquement et en perspective, la face supérieure de la plaque de support 8 qui porte les parties supérieures 9a des tubes-guides 9 et dans l'exemple de réalisation représenté sur cette figure, deux colonnes de thermocouple 20 qui s'étendent parallèlement aux tubes-guides 9, au-dessus de la plaque de support 8. La collerette permettant de suspendre la plaque de support 8 à la cuve 1 n'a pas été représentée, mais est visible sur la figure 6.

De manière classique, dans chacune des colonnes des thermocouples 20, est disposé un ensemble de conduits 21 de thermocouples. Typiquement, chaque conduit 21 reçoit intérieurement et guide un thermocouple permettant de mesurer la température du fluide de refroidissement à la sortie d'un ensemble d'assemblage présélectionné du cœur du réacteur nucléaire.

Ainsi que montré à la Fig. 2, plusieurs conduits 21 de guidage sont disposés dans une colonne 20 et sortent de cette colonne par des ouvertures périphériques ménagées au-dessus du pied de la colonne de thermocouple 20 pour rejoindre chacun un piquage désigné par la référence générale 30 et destiné au passage au travers la plaque de support 8 d'un thermocouple.

Sur cette figure, un nombre limité de conduits 21 a été représenté afin de ne pas surcharger la figure. Toutefois, dans la réalité, il existe un nombre élevé de conduits de thermocouples 21, qui doivent être maintenus en position les uns par rapport aux autres pour éviter toute interférence entre ces conduits.

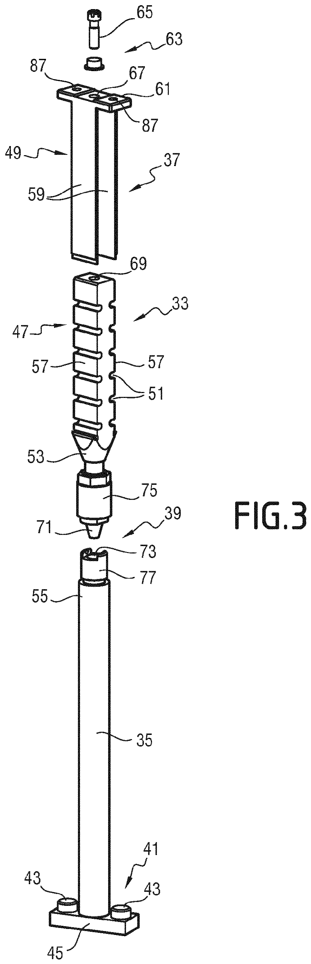

Pour ce faire, le réacteur nucléaire comporte des organes de support 33 (figure 3) prévus pour maintenir en position les conduits de thermocouples 21, les uns par rapport aux autres et par rapport à la plaque de support 8.

Chaque organe de support 33 est rigidement fixé à la plaque de support 8. Au moins un conduit de thermocouples 21 est fixé à chaque organe de support 33. Typiquement, plusieurs conduits de thermocouples 21 sont fixés à chaque organe de support 33. Ces organes de support ne sont pas représentés sur la figure 2 pour plus de clarté.

Selon l'invention, chaque organe de support 33 comporte un pied 35 rigidement fixé à la plaque de support 8, une tête 37 à laquelle sont fixés le ou chaque conduit de thermocouples 21, et une liaison 39 démontable de la tête 37 au pied 35.

Le pied 35 présente une forme allongée suivant l'axe de la cuve 1, c'est-à-dire verticalement. Il comprend une fixation démontable 41 à la plaque de support 8. Cette fixation comporte par exemple des vis 43, solidarisant une extrémité inférieure 45 du pied à la plaque de support.

La tête 37 comprend un noyau 47 et une coiffe 49 liée de manière amovible au noyau 47. Le noyau 47 et la coiffe 49 délimitent entre eux une pluralité de logements 51 de réception des conduits de thermocouples 21.

Le noyau 47 présente une forme allongée verticalement, et est placée verticalement dans le prolongement du pied 35.

La liaison démontable 39 lie le noyau 47 au pied 35. Typiquement, la liaison démontable 39 lie une extrémité inférieure 53 de noyau 47 à une extrémité supérieure 55 du pied 35.

Les logements 51 sont au moins partiellement creusés dans le noyau 47. A cet effet, le noyau 47 présente deux grandes faces verticales 57 opposées l'une à l'autre. Les logements 51 sont des rainures, typiquement horizontales et parallèles les unes aux autres, ménagées dans les grandes faces 57. Elles sont débouchantes à leurs deux extrémités opposées et s'étendent sur toute la largeur des grandes faces 57.

Chaque rainure présente une section sensiblement conjuguée de celle du conduit de thermocouple prévu pour y être reçu.

La coiffe 49 comporte au moins un bras 59 fermant les logements 51.

Dans l'exemple représenté, les logements 51 sont ménagés sur les deux grandes faces 57, la coiffe 49 comportant donc deux bras 59, fermant chacun les logements ménagés dans une des deux grandes faces 57.

Chaque bras 59 présente une surface plaquée contre la grande face 57 correspondante, fermant ainsi les logements 51.

La coiffe 49 comprend en outre un embout 61, auquel des extrémités supérieures de chaque bras 59 sont rigidement fixés. La coiffe a donc une forme de U, et est disposée à cheval sur le noyau 47. Le noyau 47 est inséré entre les deux bras 59.

Chaque conduit 21 est pincé entre l'un des bras 59 et le fond de l'encoche 51 dans lequel il est inséré.

La tête 37 comporte encore une fixation 63 de la coiffe 49 au noyau 47. Par exemple, cette fixation comporte une vis 65, un orifice 67 traversant l'embout 61 et un orifice taraudé 69 ménagé à une extrémité du noyau 47. La vis 65 est engagée dans les orifices 67 et 69. Elle présente un filetage externe coopérant avec le taraudage interne de l'orifice 69.

En variante, la coiffe ne comporte qu'un seul bras.

La liaison 39 démontable de la tête 37 au pied 35 est avantageusement une liaison vissée.

L'extrémité inférieure 53 du noyau se termine de préférence par un cône 71 qui vient s'engager dans un trou borgne de forme complémentaire 73, ménagé à l'extrémité supérieure 55 du pied. Un écrou 75 est monté captif autour de l'extrémité inférieure 53. L'extrémité supérieure 55 présente un filetage externe 77. L'écrou captif 75 est prévu pour venir se visser sur filetage externe 77, solidarisant ainsi de manière démontable la tête 37 au pied 35.

Le procédé de montage des conduits de thermocouples dans le réacteur nucléaire décrit ci-dessus va maintenant être détaillé, en référence aux figures 5 et 6. Le procédé s'applique au montage initial des conduits de thermocouples sur la plaque de support. On considère ici le cas où tous les conduits de thermocouples du réacteur nucléaire sont montés en une seule opération. Le procédé est applicable également au cas où seulement une partie des conduits est monté en une seule opération.

Le procédé comprend les étapes suivantes :
- montage des pieds 35 sur la plaque de support 8;
- assemblage de tronçons d'extrémité 79 des conduits de thermocouples 21 et des têtes 37 des organes de support 33 en un sous-ensemble 81, représenté sur la figure 5;
- transfert du sous-ensemble 81 d'une pièce au-dessus de la plaque de support 8;
- fixation des têtes 37 aux pieds 35 des organes de support 33.

Le montage des pieds 35 est effectué en utilisant les fixations 41. Par exemple, les vis 43 sont vissées dans des orifices taraudés de la plaque de support 8.

Typiquement, les conduits de thermocouples 21 comprennent chacun une partie principale allant jusqu'à la sortie de la colonne 20, le tronçon d'extrémité 79 s'étendant depuis la colonne 20 jusqu'au piquage 30. Le tronçon d'extrémité 79 est raccordé de manière démontable à la partie principale et au piquage 30, par des raccords démontables.

Dans le sous-ensemble 81, les tronçons d'extrémités 79 et les têtes 37 ont exactement la position et la forme qu'ils occuperont finalement, une fois montés sur la plaque de support 8. Ceci permet de faciliter considérablement le montage des conduits de thermocouples 21. L'assemblage du sous-ensemble 81 est réalisé en atelier, par exemple hors arrêt de tranche, dans une zone où l'irradiation est nulle.

Pour assembler le sous-ensemble 81, on utilise de préférence une maquette de la plaque de support 8, réalisée à l'échelle 1. Cette maquette reproduit notamment les colonnes de thermocouples 20, les piquages 30 et les pieds 35. Ceux-ci sont reproduits en dimension réelle, et sont disposés comme dans le réacteur nucléaire. Le sous-ensemble 81 est monté de manière provisoire sur la maquette.

Pour monter les conduits de thermocouples 21 sur la tête 37, on met d'abord en place les conduits 21 au fond des encoches 51. Puis, on place la coiffe 49 autour du noyau 47, de manière à ce que le ou les bras ferment les encoches 51. Enfin, on fixe la coiffe 49 au noyau 47, par exemple en vissant la vis 65 dans l'orifice taraudé 69.

L'étape de transfert comporte avantageusement:
- une sous-étape de fixation du sous-ensemble 81 à une structure de transport rigide 83;
- une sous-étape de déplacement de la structure de transport 83 avec le sous-ensemble 81 au-dessus de la plaque de support 8.

Comme visible sur la figure 6, la structure de transport 83 comprend une plate-forme 85 et des organes 86 de fixation des têtes 37 à la plate-forme 85.

La plate-forme 85 présente par exemple une forme générale de plaque.

Les organes de fixation 86 comprennent typiquement des trous traversant la plate-forme, et des vis non représentées. Les vis sont engagées dans les trous et viennent se visser dans des orifices taraudés 87 ménagés dans la tête 37. Ces orifices taraudés 87 sont prévus par exemple dans la coiffe 49.

Le sous-ensemble 81 est ainsi suspendu sous la plate-forme 85.

La sous-étape de fixation est réalisée pendant que le sous-ensemble 81 est en place sur la maquette.

Le déplacement de la structure de transport 83 avec le sous-ensemble 81 est réalisé par tout moyen adapté. La mise en place finale au-dessus de la plaque de support 8 est réalisée par exemple avec le pont polaire du réacteur nucléaire.

La structure de transport 83 comprend des centreurs 89 prévus pour coopérer avec des centreurs complémentaires (non représentés) montés sur la plaque de support 8. Ainsi, la structure de transport 83 est guidée jusqu'à sa position nominale par les centreurs et les centreurs complémentaires, ce qui garantit que le sous-ensemble 81 soit mis en place directement à sa position définitive par rapport à la plaque de support 8. Dans cette position, les têtes 37 sont situées verticalement immédiatement au-dessus des pieds 35 correspondants. Les cônes 71 sont engagés dans les trous borgnes 73.

La maquette est également équipée de centreurs complémentaires, disposés exactement comme les centreurs complémentaires de la plaque de support 8.

L'étape de fixation des têtes 37 aux pieds 35 est réalisée en actionnant la liaison 39, typiquement en vissant les écrous 75. Cette opération est effectuée à distance ou depuis la structure de transport 83, qui dans ce cas est agencée pour donner accès à chacune de ces liaisons. Elle comporte par exemple à cet effet des trappes amovibles transparentes. Les liaisons 39 sont actionnées par tous moyens adaptés.

Après serrage des écrous 75, les vis solidarisant les têtes 37 à la plate-forme 85 sont retirées.

Enfin, les tronçons d'extrémités 79 sont raccordés aux tronçons principaux des conduits de thermocouples 21 et aux piquages 30 par les raccords démontables et la plateforme de transport est évacuée.

Comme indiqué plus haut, l'invention porte également sur le procédé de remplacement des conduits de thermocouples existants dans le réacteur nucléaire décrit plus haut. Cette opération vise à remplacer tout ou partie des anciens conduits de thermocouples, au cours de la vie du réacteur nucléaire.

Ce procédé comprend les étapes suivantes :
- démontage des têtes 37 vis-à-vis des pieds 35;
- évacuation des têtes 37 et des tronçons d'extrémités 79 des conduits de thermocouples 21 existants ;
- assemblage de tronçons d'extrémités 79 neufs et de têtes 37 neuves en un sous-ensemble 81;
- transfert du sous-ensemble 81 d'une pièce au-dessus de la plaque de support 8;
- fixation des têtes 37 neuves aux pieds 35 des organes de support 33.

L'étape de démontage est effectuée en téléopération, en agissant sur la liaison démontable 39.

Les tronçons d'extrémités 79 sont ensuite séparés des parties principales des conduits de thermocouples 21 en agissant sur les raccords correspondants.

L'évacuation des têtes 37 et des tronçons d'extrémités 79 existants est effectuée par exemple avec la structure de transport 83 décrite plus haut. Par exemple, les organes de fixation 86 sont utilisés pour fixer les têtes 37 à la structure 83, les tronçons d'extrémités 79 restant solidaires des têtes 37.

Les pieds 35 restent en place sur la plaque de support 8 et sont réutilisés pour recevoir les têtes neuves.

Les étapes d'assemblage du sous-ensemble 81, de transfert de ce sous-ensemble 81 et de fixation des têtes neuves 37 sont comme décrit plus haut.

L'invention vise encore un procédé de remplacement d'un conduit de thermocouple individuel dans un réacteur nucléaire tel que décrit ci-dessus. Le conduit de thermocouple 21 est fixé à la plaque de support 8 par un ou plusieurs organes de support 33. Comme décrit plus haut, la tête 37 du ou de chaque organe de support 33 comporte un noyau 47 et une coiffe 49 liée de manière amovible au noyau 47, le noyau 47 et la coiffe 49 délimitant entre eux une pluralité de logements 51. Le conduit 21 à remplacer est reçu dans un des logements 51 du ou de chaque organe de support.

Le procédé comprend les étapes ci-dessous :
- séparation de la coiffe 49 par rapport au noyau 47 du ou de chaque organe de support 33 ;
- évacuation du tronçon d'extrémité 79 du conduit 21 ;
- remise en place d'un nouveau tronçon d'extrémité 79 dans le ou chaque logement 51 ;
- fixation de la ou chaque coiffe 49 sur le ou chaque noyau 47 correspondant.

Avant d'être évacué, le tronçon d'extrémité 79 est séparé de la partie principale du conduit 21 et du piquage 30, en agissant sur les raccords. L'évacuation est faite par tous moyens adapté.

La mise en place du nouveau tronçon d'extrémité est effectuée typiquement en téléopération. Avant ou après l'étape de fixation, le nouveau tronçon d'extrémité 79 est raccordé à la partie principale du conduit 21 et au piquage 30, en agissant sur les raccords prévus à cet effet.

## Revendications

1. Réacteur nucléaire comprenant :
- une cuve (1);
- des assemblages de combustibles nucléaires (3) formant un cœur (2) disposé dans la cuve (1);
- une plaque de support (8), disposée dans la cuve (1) au-dessus du cœur (2);
- une pluralité de conduits de thermocouples (21) disposés dans la cuve et traversant la plaque de support (8) par des orifices dédiés ;
- des organes de support (33) prévus pour maintenir en position les conduits de thermocouples (21), chaque organe de support (33) étant rigidement fixé à la plaque de support (8), au moins un conduit de thermocouples (21) étant fixés à chaque organe de support (33);
**caractérisé en ce que** chaque organe de support (33) comporte un pied (35) rigidement fixé à la plaque de support (8), une tête (37) à laquelle est fixé le ou chaque conduit de thermocouple (21), et une liaison démontable (39) de la tête (37) au pied (35).

2. Réacteur selon la revendication 1, **caractérisé en ce que** la liaison démontable (39) est une liaison vissée.

3. Réacteur selon la revendication 1 ou 2, **caractérisé en ce que** la tête (37) comprend un noyau (47) et une coiffe (49) liée de manière amovible au noyau (47), le noyau (47) et la coiffe (49) délimitant entre eux une pluralité de logements (51) de réception de conduits de thermocouples (21).

4. Réacteur selon la revendication 3, **caractérisé en ce que** la liaison démontable (39) lie le noyau (47) au pied (35).

5. Réacteur selon la revendication 3 ou 4, **caractérisé en ce que** les logements (51) sont au moins partiellement creusés dans le noyau (47), la coiffe (49) comportant au moins un bras (59) fermant les logements (51).

6. Procédé de montage de conduits de thermocouples (21) dans un réacteur nucléaire selon l'une quelconque des revendications précédentes, le procédé comprenant les étapes suivantes :
- montage des pieds (35) sur la plaque de support (8);
- assemblage de tronçons d'extrémités (79) des conduits de thermocouples (21) et des têtes (37) des organes de support (33) en un sous-ensemble (81);
- transfert du sous-ensemble (81) d'une pièce au-dessus de la plaque de support (8);
- fixation des têtes (37) aux pieds (35) des organes de support (33).

7. Procédé selon la revendication 6, **caractérisé en ce que** l'étape de transfert comporte :
- une sous-étape de fixation du sous-ensemble (81) à une structure de transport (83) rigide;
- une sous-étape de déplacement de la structure de transport (83) avec le sous-ensemble (81) au-dessus de la plaque de support (8).

8. Procédé selon la revendication 7, **caractérisé en ce que** la structure de transport (83) comprend une plate-forme (85) et des organes (86) de fixation des têtes (37) à la plate-forme (85).

9. Procédé selon la revendication 8, **caractérisé en ce que** la structure de transport (83) comprend des centreurs (89) prévus pour coopérer avec des centreurs complémentaires montés sur la plaque de support (8).

10. Procédé de remplacement de conduits de thermocouples (21) existants dans un réacteur nucléaire selon l'une quelconque des revendications 1 à 5, le procédé comprenant les étapes suivantes :
- démontage des têtes (37) vis-à-vis des pieds (35);
- évacuation des têtes (37) et de tronçons d'extrémité (79) des conduits de thermocouples (21) existants ;
- assemblage de tronçons d'extrémité (79) neufs et de têtes (37) neuves en un sous-ensemble (81);
- transfert du sous-ensemble (81) d'une pièce au-dessus de la plaque de support (8);
- fixation des têtes neuves (37) aux pieds (35) des organes de support (33).

11. Ensemble pour la mise en oeuvre du procédé de montage de l'une quelconque des revendications 6 à 9, l'ensemble comprenant :
- une pluralité d'organes de support (33) prévus pour maintenir en position les conduits de thermocouples (21), chaque organe de support (33) comportant un pied (35) pourvu d'une fixation (41) à la plaque de support (8), une tête (37) pourvu d'une fixation pour au moins un conduit de thermocouples (21), et une liaison (39) démontable de la tête (37) au pied (35);
- une structure de transport (83), comprenant une plate-forme (85) et des organes (86) de fixation des têtes (37) à la plate-forme (85).

## Patentansprüche

1. Nuklear-Reaktor mit:
- einem Behälter (1),
- Nuklearbrennstoffanordnungen (3), die ein Kernstück (2) bilden, das in dem Behälter (1) angeordnet ist,
- einer Halteplatte (8), die in dem Behälter (1) über dem Kernstück (2) angeordnet ist,
- einer Mehrzahl von Thermoelemente-Leitungen (21), die in dem Behälter angeordnet sind und die Halteplatte (8) durch zugeordnete Öffnungen durchqueren,
- Halteorganen (33), die vorgesehen sind zum Halten der Thermoelemente-Leitungen (21) in Position, wobei jedes Halteelement (33) an der Halteplatte (8) starr befestigt ist, wobei wenigstens eine Thermoelemente-Leitung (21) an jedem Halteorgan (33) befestigt ist,
**dadurch gekennzeichnet, dass** jedes Halteorgan (33) aufweist einen Fuß (35), der starr an der Halteplatte (8) befestigt ist, einen Kopf (37), an dem die oder jede Thermoelement-Leitung (21) befestigt ist, und eine demontierbare Ankupplung (39) des Kopfs (37) an den Fuß (35) .

2. Reaktor gemäß Anspruch 1, **dadurch gekennzeichnet, dass** die demontierbare Ankupplung (39) eine Schraubverbindung ist.

3. Reaktor gemäß Anspruch 1 oder 2, **dadurch gekennzeichnet, dass** der Kopf (37) aufweist einen Kern (47) und eine Kappe (49), die mit dem Kern (47) lösbar verbunden ist, wobei der Kern (47) und die Kappe (49) zwischen sich eine Mehrzahl von Aufnahmen (51) zur Aufnahme von Thermoelemente-Leitungen (21) begrenzen.

4. Reaktor gemäß Anspruch 3, **dadurch gekennzeichnet, dass** die demontierbare Ankupplung (39) den Kern (47) mit dem Fuß (35) verbindet.

5. Reaktor gemäß Anspruch 3 oder 4, **dadurch gekennzeichnet, dass** die Aufnahmen (51) wenigstens teilweise in den Kern (47) vertieft sind, wobei die Kappe (49) wenigstens einen Arm (59) aufweist, der die Aufnahmen (51) verschließt.

6. Verfahren zur Montage von Thermoelemente-Leitungen (21) in einem Nuklear-Reaktor gemäß irgendeinem der vorhergehenden Ansprüche, wobei das Verfahren die folgenden Schritte aufweist:
- Montieren der Füße (35) an der Halteplatte (8),
- Zusammenbauen von Endabschnitten (79) der Thermoelemente-Leitungen (21) und der Köpfe (37) der Halteorgane (33) zu einer Untergruppe (81),
- Überführen der Untergruppe (81) in einem Stück über die Halteplatte (8),
- Befestigen der Köpfe (37) an den Füßen (35) der Halteorgane (33) .

7. Verfahren gemäß Anspruch 6, **dadurch gekennzeichnet, dass** der Überführen-Schritt aufweist:
- einen Unterschritt des Befestigens der Untergruppe (81) an einer starren Transportstruktur (83),
- einen Unterschritt des Verlagerns der Transportstruktur (83) mit der Untergruppe (81) über die Halteplatte (8).

8. Verfahren gemäß Anspruch 7, **dadurch gekennzeichnet, dass** die Transportstruktur (83) aufweist eine Plattform (85) und Organe (86) zur Befestigung der Köpfe (37) an der Plattform (85) .

9. Verfahren gemäß Anspruch 8, **dadurch gekennzeichnet, dass** die Transportstruktur (83) Zentriereinrichtungen (89) aufweist, die vorgesehen sind zum Zusammenwirken mit komplementären Zentriereinrichtungen, die an der Halteplatte (8) angebracht sind.

10. Verfahren zum Auswechseln von Thermoelemente-Leitungen (21), die in einem Nuklear-Reaktor gemäß irgendeinem der Ansprüche 1 bis 5 vorliegen, wobei das Verfahren die folgenden Schritte aufweist:
- Demontieren der Köpfe (37) gegenüber den Füßen (35),
- Wegnehmen der Köpfe (37) und von Endabschnitten (79) der vorliegenden Thermoelemente-Leitungen (21),
- Zusammenbauen der neuen Endabschnitte (79) und der neuen Köpfe (37) zu einer Untergruppe (81),
- Überführen der Untergruppe (81) in einem Stück über die Halteplatte (8),
- Befestigen der neuen Köpfe (37) an den Füßen (35) der Halteorgane (8).

11. Einrichtung zur Durchführung des Verfahrens zur Montage gemäß irgendeinem der Ansprüche 6 bis 9, wobei die Einrichtung aufweist:
- eine Mehrzahl von Halteorganen (33), die vorgesehen sind zum Aufrechterhalten der Thermoelemente-Leitungen (21) in Position, wobei jedes Halteorgan (33) aufweist einen Fuß (35), der mit einer Befestigung (41) an der Halterplatte (8) versehen ist, einen Kopf (37), der mit einer Befestigung für wenigstens eine Thermoelemente-Leitung (21) versehen ist, und eine demontierbare Ankupplung (39) des Kopfs (37) an den Fuß (35),
- eine Transportstruktur (38), die aufweist eine Plattform (85) und Organe (86) zur Befestigung der Köpfe (37) an der Plattform (85) .

## Claims

1. A nuclear reactor, comprising:
- a vessel (1),
- a plurality of nuclear fuel assemblies (3) forming a core (2) arranged in the vessel (1);
- a support plate (8), arranged in the vessel (1) above the core (2);
- a plurality of thermocouple ducts (21) arranged in the vessel and passing through the support plate (8) through dedicated orifices;
- support members (33) provided to keep the thermocouple ducts (21) in position, each support member (33) being rigidly attached to the support plate (8), at least one thermocouple duct (21) being attached to each support plate (33);
**characterized in that** each support member (33) includes a foot (35) rigidly attached to the support plate (8), a head (37) to which the or each thermocouple duct (21) is attached, and a detachable connection (39) from the head (37) to the foot (35).

2. The reactor according to claim 1, **characterized in that** the detachable connection (39) is a screwed connection.

3. The reactor according to claim 1 or 2, **characterized in that** the head (37) comprises a core (47) and a cap (49) removably connected to the core (47), the core (47) and the cap (49) delimiting a plurality of housings (51) between them for receiving thermocouple ducts (21).

4. The reactor according to claim 3, **characterized in that** the detachable connection (39) connects the core (47) to the foot (35).

5. The reactor according to claim 3 or 4, **characterized in that** the housings (51) are at least partially hollowed in the core (47), the cap (49) including at least one arm (59) closing the housings (51).

6. A method for assembling thermocouple ducts (21) in a nuclear reactor according to any one of the preceding claims, the method comprising the following steps:
- assembling feet (35) on the support plate (8);
- assembling end segments (79) of the thermocouple ducts (21) and heads (37) of the support members (33) in a subassembly (81);
- transferring the subassembly (81) of a part above the support plate (8);
- attaching the heads (37) to the feet (35) of the support members (33).

7. The method according to claim 6, **characterized in that** the transfer step includes:
- a sub-step for attaching the subassembly (81) to a rigid transport structure (83);
- a sub-step for moving the transport structure (83) with the subassembly (81) above the support plate (8).

8. The method according to claim 7, **characterized in that** the transport structure (83) comprises a platform (85) and members (86) for attaching the heads (37) to the platform (85).

9. The method according to claim 8, **characterized in that** the transport structure (83) comprises centering devices (89) provided to cooperate with complementary centering devices mounted on the support plate (8).

10. A method for replacing existing thermocouple ducts (21) in a nuclear reactor according to any one of claims 1 to 5, the method comprising the following steps:
- disassembling the heads (37) with respect to the feet (35);
- discharging the heads (37) and end segments (79) of the existing thermocouple ducts (21);
- assembling new end segments (79) and new heads (37) in a subassembly (81);
- transferring the subassembly (81) of a part above the support plate (8);
- attaching the new heads (37) to the feet (35) of the support members (33).

11. An assembly for implementing the assembly method according to any one of claims 6 to 9, the assembly comprising:
- a plurality of support members (33) provided to keep the thermocouple ducts (21) in position, each support member (33) including a foot (35) provided with an attachment (41) to the support plate (8), a head (37) provided with an attachment for at least one thermocouple duct (21), and a detachable connection (39) of the head (37) to the foot (35);
- a transport structure (83), comprising a platform (85) and members (86) for attaching the heads (37) to the platform (85).
